**Europäisches Patentamt**

**European Patent Office**

**Office européen des brevets**

(11) Veröffentlichungsnummer: **0 253 288 B1**

## EUROPÄISCHE PATENTSCHRIFT

(45) Veröffentlichungstag der Patentschrift: **04.12.91**

(51) Int. Cl.⁵: **B29B 7/44**

(21) Anmeldenummer: **87109850.5**

(22) Anmeldetag: **08.07.87**

(54) **Kombinierte Misch- und Fördereinrichtung für hochviskose Flüssigkeiten.**

(30) Priorität: **16.07.86 DE 3623932**

(43) Veröffentlichungstag der Anmeldung:
**20.01.88 Patentblatt 88/03**

(45) Bekanntmachung des Hinweises auf die
Patenterteilung:
**04.12.91 Patentblatt 91/49**

(84) Benannte Vertragsstaaten:
**AT BE CH DE FR GB IT LI NL SE**

(56) Entgegenhaltungen:
**DE-B- 1 155 234        DE-C- 575 198**
**FR-A- 2 183 570        GB-A- 856 708**
**GB-A- 1 071 082        US-A- 2 991 503**
**US-A- 3 207 486        US-A- 3 873 072**
**US-A- 3 920 225        US-A- 3 938 783**

(73) Patentinhaber: **Schneider, Friedhelm**
**Zur Platte**
**W-5226 Reichshof-Hahn(DE)**

(72) Erfinder: **Schneider, Friedhelm**
**Zur Platte**
**W-5226 Reichshof-Hahn(DE)**

(74) Vertreter: **Missling, Arne, Dipl.-Ing. et al**
**Patentanwälte Dipl.-Ing. R. Schlee Dipl.-Ing.**
**A. Missling Bismarckstrasse 43**
**W-6300 Giessen(DE)**

## Beschreibung

Die Erfindung betrifft eine kombinierte Misch- und Fördereinrichtung für hochviskose Flüssigkeiten gemäß dem Oberbegriff des Anspruchs 1.

Wenn es auf sehr homogene Gemische hochviskoser Flüssigkeiten aus zwei oder mehreren Komponenten ankommt, wobei zumindest eine dieser Komponenten hochviskos ist, wird normalerweise in getrennten Einruchtungen gemischt und gefördert. Ein besonderer Nachteil dieser Einrichtungen besteht dann darin, daß bei Umstellung von der einen auf die andere Komponente beide Einrichtungen umgerüstet und zeitraubend gesäubert werden müssen, was bei der Verarbeitung hockviskoser Flüssigkeiten, speziell in der Kunststoffindustrie, zu einem hohen Arbeitsaufwand führt.

Kombinierte Misch- und Fördereinrichtungen für hochviskose Flüssigkeiten der eingangs genannten Art sind bereits bekannt. So ist in der DE-OS 33 13 710 eine Rührvorrichtung beschrieben, mit der sowohl eine Misch-als auch Förderwirkung erzielt werden kann. Diese Misch- und Fördereinrichtung besteht im wesentlichen aus einem zylindrischen Gehäuse, an dessen Innenwand mehrere feststehende Leitschaufeln, Leiträder bildent, angebracht sind und zu dem koaxial eine Läuferwelle mit Laufrädern verläuft, wobei das zylindrische Gehäuse mit den an seiner Innenwand feststehenden, Leiträder bildenden Leitschaufeln den Stator und die Läuferwelle mit den daran angeordneten Laufrädern den Rotor bilden. Sie weist ferner eine Gleitringdichtung auf, die einen Mischraum nach außen hin abdichtet und hat seitliche Eintrittsöffnungen zum Eintreten der zu mischenden Flüssigkeiten und eine Austrittsöffnung für die fertige Mischung.

Mit dieser Rührvorrichtung kann zwar die Misch-und Förderwirkung, insbesondere für Arbeiten in der Fasertechnik oder z.B. bei der Herstellung von Fotoemulsionen beträchtlich erhöht werden, doch ist die Fertigung der feststehenden, Leiträder bildenden Leitschaufeln in Form von kompliziert geformten Stacheln für den Stator wie auch die der ebenfalls aus Stacheln bestehenden, an der Läuferwelle angeordneten Leiträder für den Rotor sehr aufwendig und entsprechend teuer. Da die Rührvorrichtung in ihrer Charakteristik einer Förderschnecke ähnelt, hat sie wegen der zu erzielenden intensiven Mischwirkung auch eine noch zu lange Baulänge und ist daher ebenfalls teuer in der Herstellung. Auch ist, wenn in getrennten Rührvorrichtungen gemischt und gefördert wird, für die Umstellung von der einen auf die andere Komponente eine Umrüstung und zeitraubende Säuberung dieser Vorrichtungen notwendig, was bei der Verarbeitung hochviskoser Flüssigkeiten, speziell in der Kunststoffindustrie, zu einem hohen Arbeitsaufwand führt. Eine Zumischung einer oder mehrerer Komponenten während des Mischens oder Förderns ist ebenfalls nicht möglich.

Aus der DE-AS 1 150 360 ist eine Knet- und Verreibungsmaschine für pastenartige Massen, insbesondere für zähe oder angänglich sehr grobstückige pastenartige Massen, wie Schokoladenmassen, Farbgrundstoffe sowie andere chemische und pharmazeutische Erzeugnisse, bekannt. Die Knet- und Verreibungsmaschine hat einen liegend angeordneten Doppelzylindertrog und zwei ein dessen Zylinderachsen drehbar gelagerten, mit gleicher Drehzahl umlaufenden sowie mit schräg stehenden und bis an die Zylinderinnenflächen heranreichenden Knet- und Verreibungsorganen versehenen Wellen, deren Abstand kleiner ist als der Durchmesser der von den Außenkanten der Knet- und Verreibungsorgane beschriebenen Kreise. Die Knet- und Verreibungsorgane dieser Maschine sind in an sich bekannter Weise als kreissektorförmige, vorzugsweise ebene, in Reihen angeordnete und mit Durchbrechungen versehene Flügel ausgebildet, wobei die Flügel der einen Knetwelle zu denen der anderen Knewtwelle entgegengesetzt schräg gestellt sind.

Die beiden Wellen sind derart zwangsläufig miteinander gekuppelt, daß sie im gleichen Drehsinn und mit gleicher Geschwindigkeit antreibbar sind und daß die Flügelreihen der beiden Wellen in der Trogmitte durcheinander hindurchkämmen. Sektorwinkel und die Schrägstellung der Flügel sowie ihr gegenseitiger Abstand sind so gewählt, daß während einer Umdrehung der Wellen die Zylinderinnenflächen vollständig von den Außenkanten der Flügel bestrichen werden und daß zwischen den beim Hindurchkämmen der Flügelreihen aneinander vorbeilaufenden Seitenkanten der Flügel nur ein geringer Bewegungsabstand verbleibt.

Mit dieser Knet- und Verreibungsmaschine kann zwar eine besonders starke Knet- und Reibwirkung, z.B. für zähe oder anfänglich sehr grobstückige pastenartige Massen, wie Schokoladenmassen, Farbstoffe sowie andere chemische und pharmazeutische Erzeugnisse erzielt werden, doch ist diese Knet- und Verreibungsmaschine nicht als Misch- und Fördereinrichtung für hochviskose Flüssigkeiten geeignet. Eine oder mehrere Komponenten der infrage stehenden Massen können auch nicht zusätzlich zugemischt werden.

In der FR-PS 15 23 920 ist eine Einruchtung zum Mischen zweier Flüssigkeiten oder Gase zur Hertellung von Brennstoffen beschrieben. Die Komponenten der Flüssigkeiten bzw. Gase werden jeweils getrennt über ein durch einen Anschluß mit einem Gehäuse verbundenen und senkrecht zu diesem angeordneten Leitungsrohr bei höherem Druck und ein Zuführungsrohr, das koaxial zum Gehäuse liegt und an diesem angeflanscht ist, bei schwächerem Druck zugeführt bzw. nach Beenden des Mischvorganges über ein ebenfalls durch einen Flansch verbundenes Ausgangsrohr abgeführt. Ein koxial im Gehäuse angeordnetes und mit Flanschen befestigtes Zuleitungsrohr weist am Umfang mehrere Öffnungnen auf, die mit einer durch dieses Leitungsrohr geschaffenen Ringkammer in Verbindung stehen. Ein an diesem Leitungsrohr angebrachtes zentrales und sich in Längsrichtung des Gehäuses erstreckendes Innenrohr hat eine Reihe von am Umfang vorgesehenen Öffnung, aus denen die Flüssigkeit bzw. das Gas nach Zuführen über einen Krümmer und schließlich über eine Halbkugelwand des Innenrohres in einen Durchgang einfließen bzw. einströmen kann. Dadurch, daß die einzelnen Komponenten der zu mischenden Flüssigkeiten bzw. der Gase unter unterschiedlichen Drucken zuführbar sind, wird die erforderliche Bewegung der Komponenten für ihre gründliche Durchmischung erzeugt.

Aus der Beschreibung dieser Einrichtung geht somit deutlich hervor, daß sie zwar zur Herstellung homogener Mischungen aus zwei Flüssigkeiten oder Gasen durchaus geeignet ist, daß sie aber zum kombinierten Mischen und Fördern hochviskoser Flüssigkeiten wegen ihres Aufbaues überhaupt nicht verwendbar ist. Bei dem senkrecht zum Gehäuse angebrachten Zuleitungsrohr handelt es sich auch nicht um eine Mischdüse.

Aus der US-Patentschrift 2 991 503 ist eine Misch- und Fördereinrichtung für hochviskose Flüssigkeiten bekannt, bei der an der Innenwand eines zylindrischen Gehäuses mehrere feststehende, leiträderbildende Leitschaufeln angebracht sind, zu denen eine Läuferwelle mit Laufrädern koaxial verläuft, wobei das zylindrische Gehäuse mit seinen an der Innenwand feststehenden Leiträdern den Stator und die Läuferwelle mit den daran befindlichen Laufrädern den Rotor einer Axialkreiselpumpe bilden. Diese vorbekannte Einrichtung ist mit einer einzigen Eintrittsöffnung versehen, in die von oben her beliebige Mischungskomponenten eingefüllt werden. Eine Vorverteilung, etwa einer Flüssigkeit in einer anderen, um eine gleichmäßige Durchmischung zu erreichen, ohne daß die Axialkreiselpumpe mit zu vielen Stufen versehen sein muß, ist bei dieser Ausführung nicht vorgesehen.

Der Erfindung liegt daher die Aufgabe zugrunde, eine kombinierte Misch- und Fördereinrichtung für hochviskose Flüssigkeiten vorzuschlagen, wobei die Misch- und Fördereinrichtung als eine ein- oder mehrstufige Axialkreiselpumpe ausgebildet sein soll, bei der die zu mischenden hochviskosen Flüssigkeiten seitlich zuführbar sind und bei der Misch- und Förderorgane so angeordnet sein sollen, daß ein oberes Gehäuseteil mit wesentlichen Teilen der Einrichtung von einem unteren Gehäuseteil abhebbar ist, so daß eine Umstellung von der einen auf die andere Komponente ohne Umrüstung und aufwendige Säuberung der Einrichtung möglich ist. Die Eintrittsöffnungen der zu mischenden Flüssigkeiten sollen so beschaffen sein, daß von vornherein eine gute Vorverteilung einer zu einer Hauptkomponente der hochviskosen Flüssigkeit zuzumischenden Flüssigkeit als Vorbereitung für den eigentlichen Mischprozeß gewährleistet ist.

Diese Aufgabe wird mit den Merkmalen des kennzeichnenden Teils von Anspruch 1 gelöst.

Weitere Ausgestaltungen der Erfindung ergeben sich aus den Unteransprüchen 2 bis 11.

Die mit der Erfindung erzielten Vorteile bestehen zunächst darin, daß bei der Umstellung von der einen auf die andere Komponente von zu mischenden und fördernden hochviskosen Flüssigkeiten ein Umrüsten von Einrichtungen und ihr zeitraubendes Reinigen nicht mehr erforderlich sind, weil die kombinierte Misch- und Fördereinrichtung als eine ein- oder mehrstufige Axialkreiselpumpe ausgebildet ist, bei der Misch- und Förderorgane so angeordnet sind, daß ein oberes Gehäuseteil mit wesentlichen Teilen der Einrichtung nach Lösen von Schrauben vom unteren Gehäuseteil leicht abhebbar ist. Hierdurch wird die Wartung und Reinigung der Misch- und Fördereinrichtung sehr vereinfacht.

Die einzelnen Komponenten werden nun erfindungsgemäß über einen seitlichen Ansatzstutzen zugeführt, bevor sie das erste Laufrad beaufschlagen können. Das Mischen der betreffenden, zum Teil hochviskosen Flüssigkeiten wird nur in der Pumpe selbst vorgenommen, wobei eine in einer Ringnut angebrachte Dichtung das Eindringen von Flüssigkeiten in das obere Gehäuseteil verhindert, so daß die Lagerung der Läuferwelle nicht beschädigt werden kann. Dadurch, daß mindestens eine Mischdüse im seitlichen Ansatzstutzen vorgesehen ist, kann eine zweite Komponente einer hochviskosen Flüssigkeit während des Mischens zugeführt werden. Mehrere Löcher in der Mischdüse sorgen in vorteilhafter Weise für eine bessere Vorverteilung der zweiten Komponente. Zur besseren Verwirbelung der Mischung in der Axialkreiselpumpe sind insbesondere die Laufradschaufeln der Laufräder in bekannter Weise mit mindestens einem Loch versehen.

Ausführungsbeispiele der Erfindung sind in der Zeichnung dargestellt und werden im folgenden näher beschrieben. Es zeigen

Fig. 1    eine Schnittansicht der erfindungsgemäßen Misch- und Fördereinrichtung und

Fig. 2    eine Querschnittsansicht durch das untere Gehäuseteil der erfindungsgemäßen Misch-und Fördereinrichtung.

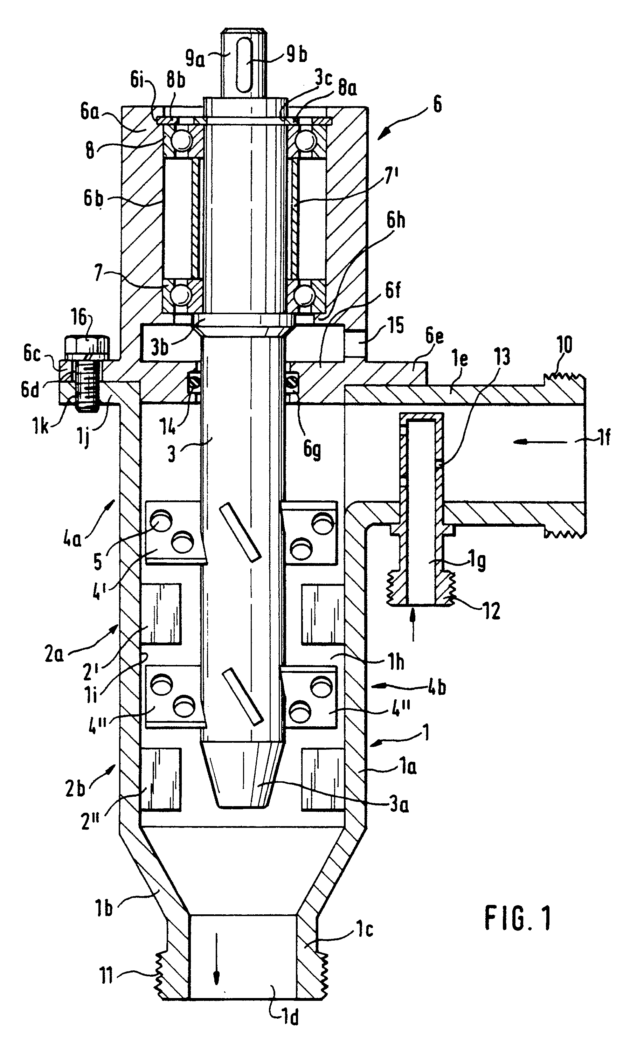

Fig. 1 zeigt in einer Schnittansicht eine Ausführungsform der erfindungsgemäßen Misch- und Fördereinrichtung, die hier als zweistufige Axialkreiselpumpe ausgebildet ist. Bei geringeren Ansprüchen an die Qualität der zu mischenden Flüssigkeiten genügt jedoch nur eine Stufe, während bei besonders hohen Qualitätsanforderungen mehr als zwei Stufen benutzt werden müssen. Die Axialkreiselpumpe ist in einem zweiteiligen Gehäuse, bestehend aus einem unteren Gehäuseteil 1 und einem oberen Gehäuseteil 6, untergebracht. Das untere Gehäuseteil 1 weist an einer Innenwand 1i ihres zylindrischen Gehäuseabschnitts 1a erste und zweite Leiträder 2a und 2b auf, die aus mindestens zwei symmetrisch zueinander angeordneten Leitschaufeln 2', 2'' bestehen, welche in gleicher Höhe einander gegenüberliegend angeordnet sind. Sie können zwecks besserer Verwirbelung einer hochviskosen Flüssigkeit bzw. Mischung mit mindestens einem Loch versehen sein. In einen Mischraum 1h des unteren Gehäuseteils 1 ist eine im oberen Gehäuseteil 6 gelagerte Läuferwelle 3 einsetzbar. An der Läuferwelle 3 sind mindestens zwei schräg gestellte Laufradschaufeln 4', 4'' vorgesehen, die jeweils erste und zweite Laufräder 4a und 4b mit mindestens einem Loch 5 bilden.

Das untere Gehäuseteil 1 weist einen Abflußtrichter 1b mit einem daran angeordneten Abzugsstutzen 1c auf, der an einer Endseite des unteren Gehäuseteils 1 eine Austrittsöffnung 1d für die fertige Mischung und ein Anschlußgewinde 11 hat, auf das ein nicht dargestelltes Überwurfgewinde einer Abführrleitung aufschraubbar ist. Auf der rechten Seite des unteren Gehäuseteils 1 ist rechtwinklig dazu ein Ansatzstutzen 1e mit einem Anschlußgewinde 10 zum Aufschrauben einer Überwurfmutter einer nicht gezeigten Zufuhrleitung und eine Eintrittsöffnung 1f für eine hochviskose Flüssigkeit angeordnet. Der Ansatzstutzen 1e hat an einer Unterseite eine Bohrung 1g zum Einsetzen einer Mischdüse 12, die in ihrem, in den Ansatzstutzen 1e hineinragenden oberen Teil mehrere Austrittslöcher 13 für eine bessere Vorverteilung der zuzumischenden zweiten flüssigen Komponente der Mischung aufweist.

Auf der linken Seite des unteren Gehäuseteils 1 ist ein Flansch 1j mit einer Gewindebohrung 1k vorgesehen, in die eine Zylinderschraube 16 zum Verschrauben des noch zu beschreibenden oberen Gehäuseteils 6 mit dem unteren Gehäusteil 1 einschraubbar ist.

Im oberen zylindrischen Gehäuseteil 6 ist die Läuferwelle 3 in Kugellagern 7 und 8 gelagert, die durch eine Distanzhülse 7' auf Abstand gehalten sind. Das Kugellager 7 ist dabei durch einen Absatz 3b der Läuferwelle 3 und einen Ringansatz 6h im zylindrischen Gehäuseabschnitt 6a des oberen Gehäuseteils 6 in Position gehalten. Das Kugellager 8 wird hingegen durch einen in eine Ringnut 3c der Läuferwelle 3 einsetzbaren Haltering 8a sowie durch einen in eine Ringnut 6i des oberen Gehäuseabschnittes 1a einsetzbaren Haltering 8b fest in Position gehalten. Die Läuferwelle 3 hat an dem einen Ende einen Konus 3a und am anderen Ende eine Paßfeder 9b sowie einen Lagerzapfen 9a, mit dem die Läuferwelle 3 von einem nicht gezeigten Motor antreibbar ist.

Das obere Gehäusteil 6 weist einen linken Flansch 6c mit einer Bohrung 6d auf, so daß die Zylinderschraube 16 in diese einsetzbar und durch Einschrauben in die Gewindebohrung 1k des Flansches 1j das obere Gehäusteil 6 mit dem unteren Gehäuseteil 1 verschraubbar ist. Hierbei ist ein Ringansatz 6f des oberen Gehäuseabschnittes 6a in das untere Gehäuseteil 1 passend einsetzbar, wobei zugleich ein rechter Flansch 6e des oberen Gehäuseteils 6 dem Ansatzstutzen 1e ebenfalls passend anliegt.

Der Ringansatz 6f weist läuferwellenseitig eine Ringnut 6g für eine Dichtung 14 auf, die verhindert, daß Mischflüssigkeit aus dem Mischraum 1h der Axialkreiselpumpe in das obere Gehäuseteil 6 eindringt, wo sie möglicherweise die Lagerung der Läuferwelle 3 beschädigen kann. Unmittelbar über dem rechten Flansch 6e des zylindrischen Gehäuseabschnittes 6a ist eine Druckentlastungs- und Kontrollöffnung 15 vorgesehen.

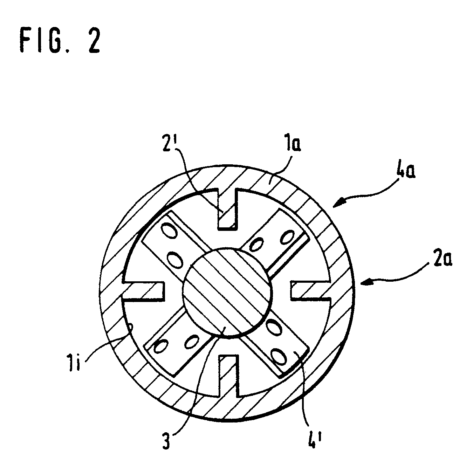

Fig. 2 zeigt eine Querschnittsansicht durch einen unteren Gehäuseabschnitt 1a der erfindungsgemäßen Misch-und Fördereinrichtung. An der Innenwand 1i des Gehäuseabschnittes 1a sind einander gegenüberstehende Leitschaufeln 2' des ersten Leitrades 2a angeordnet. Die Läuferwelle 3 trägt vier einander gegenüberstehende, schräg gestellte Laufradschaufeln 4' mit jeweils zwei Löchern 5. Alle an der Läuferwelle 3 vorgesehenen Laufräder 4a, 4b und alle an der Innenwand 1i des Gehäuseabschnitts 1a angebrachten Leiträder 2a, 2b sind so angeordnet, daß das Gehäuseteil 6 samt Läuferwelle 3 mit deren Lagerung 7, 8 und den Laufrädern 4a, 4b nach Lösen von hier nicht gezeigten Zylinderschrauben axial heraushebbar ist, so daß die Wartung und Reinigung der Misch- und Fördereinrichtung sehr vereinfacht ist.

Als besonders vorteilhaft hat es sich herausgestellt, wenn die in den Ansatzstutzen 1e eingesetzte Mischdüse 12 um ihre Achse rotierend ausgebildet ist. Hierdurch wird eine noch effektivere Mischung erhalten.

## Patentansprüche

1.   Kombinierte Misch- und Fördereinrichtung für hochviskose Flüssigkeiten mit einem zylindrischen Gehäuse, an dessen Innenwand (1i) mehrere feststehende Leitschaufeln (2', 2''), Leiträder (2a, 2b) bildend, angebracht sind und zu dem koaxial eine Läuferwelle (3) mit Laufrädern (4a, 4b) verläuft, wobei das zylindrische Gehäuse mit den an seiner Innenwand (1i) feststehenden, Leiträder (2a, 2b) bildenden Leitschaufeln (2', 2'') den Stator und die Läuferwelle (3) mit den daran angeordneten Laufrädern (4a, 4b) den Rotor bilden, mit einer Gleitringdichtung (14), die einen Mischraum (1h) nach außen hin abdichtet, mit seitlichen Eintrittsöffnungen für die zu mischenden Flüssigkeiten und mit einer Austrittsöffnung (1d) für die fertige Mischung, wobei die kombinierte Misch- und Fördereinrichtung als Axialkreiselpumpe ausgebildet und in unteren und oberen Gehäuseteilen (1, 6) untergebracht ist und die zu mischenden Flüssigkeiten über einen seitlichen, im unteren Gehäuseteil (1) angeordneten Ansatzstutzen (1e) vor dem ersten, an der Läuferwelle (3) angeordneten Laufrad (4a) zuführbar sind, wobei weiterhin Laufradschaufeln (4', 4'') der ersten und zweiten Laufräder (4a, 4b) mindestens ein Loch (5) aufweisen, und wobei schließlich die Leiträder (2a, 2b) an der Innenwand (1i) des unteren zylindrischen Gehäuseteils (1a) mit gleichem Abstand zu den Laufrädern (4a, 4b) angeordnet sind, dadurch gekennzeichnet, daß der Ansatzstutzen (1e) unten mindestens eine Bohrung (1g) aufweist, in die eine Mischdüse (12) mit mehreren Austrittslöchern (13) zum Austritt einer zweiten Flüssigkeit einsetzbar ist.

2. Kombinierte Misch- und Fördereinrichtung nach Anspruch 1, dadurch gekennzeichnet, daß die Axialkreiselpumpe mindestens einstufig ausgebildet ist.

3. Kombinierte Misch- und Fördereinrichtung nach Anspruch 1, dadurch gekennzeichnet, daß der seitliche Ansatzstutzen (1e) am unteren Gehäuseteil (1) eine Eintrittsöffnung (1f) mit einem Anschlußgewinde (10) für eine Leitung zum Zuführen einer hochviskosen, flüssigen Hauptkomponente aufweist und daß am unteren zylindrischen Gehäuseabschnitt (1a) ein Abflußtrichter (1b) angeordnet ist, dem sich ein Abzugstutzen (1c) mit einer Austrittsöffnung (1d) und einem Anschlußgewinde (11) für eine Abfuhrleitung zum Abziehen einer fertigen Mischung anschließt.

4. Kombinierte Misch- und Fördereinrichtung nach Anspruch 1, dadurch gekennzeichnet, daß die an der Läuferwelle (3) voneinander auf gleichen Abstand gehaltenen ersten und zweiten Laufräder (4a, 4b) aus mindestens zwei symmetrisch zueinander liegenden und schräg gestellten Laufradschaufeln (4', 4'') bestehen und in gleicher Höhe zueinander angeordnet sind.

5. Kombinierte Misch- und Fördereinrichtung nach Anspruch 1, dadurch gekennzeichnet, daß die an der Innenwand (1i) des unteren zylindrischen Gehäuseabschnitts (1a) der Axialkreiselpumpe befestigten ersten und zweiten Leiträder (2a, 2b) jeweils aus mindestens zwei symmetrisch zueinander angeordneten Leitschaufeln (2', 2'') bestehen und in gleicher Höhe einander gegenüberliegend angeordnet sind.

6. Kombinierte Misch- und Fördereinrichtung nach Anspruch 1, dadurch gekennzeichnet, daß das untere Gehäuseteil (1) einen linken Flansch 1j) mit einer Gewindebohrung (1k) und das obere Gehäuseteil (6) einen linken Flansch (6c) mit einer Bohrung (6d) aufweisen, so daß das untere Gehäuseteil (1) mit dem oberen Gehäuseteil (6) durch eine Zylinderschraube (16) verschraubbar ist, wobei ein Ringansatz (6f) des oberen Gehäuseabschnittes (6a) in das untere Gehäuseteil (1) passend einsetzbar ist und ein rechter Flansch (6e) des oberen Gehäuseteils (6) dem Ansatzstutzen (1e) anliegt.

7. Kombinierte Misch- und Fördereinrichtung nach Anspruch 6, dadurch gekennzeichnet, daß der Ringansatz (6f) eine Ringnut (6g) für eine Dichtung (14) aufweist.

8. Kombinierte Misch- und Fördereinrichtung nach Anspruch 6, dadurch gekennzeichnet, daß an der rechten Seite des oberen zylindrischen Gehäuseteils (6) unmittelbar über dem rechten Flansch (6e) eine Druckentlastungs- und Kontrollöffnung (15) vorgesehen ist.

9. Kombinierte Misch- und Fördereinrichtung nach einem der Ansprüche 1 bis 8, dadurch gekennzeichnet, daß die Läuferwelle (3) im oberen Gehäuseteil (6) in Kugellagern (7, 8) gelagert ist, die durch eine Distanzhülse (7') auf Abstand gehalten sind, wobei das Kugellager (7) durch einen Absatz (3b) der Läuferwelle (3) und einen Ringansatz (6h) des oberen Gehäuseteils (6) bzw. das Kugellager (8) durch einen in eine Ringnut (6i) einsetzbaren Haltering (8b) sowie durch einen in eine Ringnut (3c) der Läuferwelle (3) einsetzbaren Haltering (8a) in Position gehalten sind.

10. Kombinierte Misch- und Fördereinrichtung nach einem der Ansprüche 1 bis 9, dadurch gekennzeichnet, daß die Läuferwelle (3) einen Lagerzapfen (9a) und eine Paßfeder (9b) aufweist.

11. Kombinierte Misch- und Fördereinrichtung nach einem der Ansprüche 1 bis 10, dadurch gekennzeichnet, daß die Laufräder (4a, 4b) und die Leiträder (2a, 2b) so angeordnet sind, daß das obere Gehäuseteil (6) samt Läuferwelle (3) mit deren Lagerung (7, 8) und den Laufrädern (4a, 4b) nach Lösen der Zylinderschraube (16) aus dem unteren Gehäuseteil (1) heraushebbar ist.

12. Kombinierte Misch- und Fördereinrichtung nach einem der Ansprüche 1 bis 11, dadurch gekennzeichnet, daß die Mischdüse (12) um ihre Achse rotierend ausgebildet ist.

## Claims

1. Combined mixing and conveying arrangement for highly viscous liquids, having a cylindrical housing, on the inside wall (1i) of which are arranged several fixed guide blades (2', 2"), forming guide wheels (2a, 2b), and to which extends coaxially a rotor shaft (3) with blade wheels (4a, 4b), the cylindrical housing with the guide blades (2', 2") fixed on its inside wall (1i) and forming guide wheels (2a, 2b) forming the stator and the rotor shaft (3) with the runner wheels (4a, 4b) arranged thereon forming the rotor, with a sliding ring packing (14), by which a mixing chamber (1h) is sealed off outwardly, with lateral inlet openings for the liquids to be mixed and with an outlet opening (1d) for the prepared mixture, the combined mixing and conveying means being formed as an axial centrifugal pump and being arranged in lower and upper housing parts (1, 6) and the liquids to be mixed being able to be supplied by way of a lateral projection (1e) arranged in the lower housing part (1) before the first runner wheel (4a) arranged on the runner shaft (3), and also runner wheel blades (4', 4") of the first and second runner wheels (4a, 4b) comprising at least one hole (5), and finally the guide wheels (2a, 2b) are arranged on the inside wall (1i) of the lower cylindrical housing part (1a) with equal spacing to the runner wheels (4a, 4b), characterised in that the connector (1e) has at its base at least one bore (1g), into which can be inserted a mixing nozzle (12) with several outlet holes (13) for the outlet of a second liquid.

2. Combined mixing and conveying arrangement according to claim 1, characterised in that the axial centrifugal pump is a a single stage pump.

3. Combined mixing and conveying arrangement according to claim 1, characterised in that the lateral connector (1e) on the lower housing part (1) comprises an inlet opening (1f) with a connecting screw-thread (10) for a pipe for the supply of a highly viscous, liquid main component and that the lower cylindrical housing section (1a) has arranged thereon a discharge funnel (1b), to which is connected a discharge pipe (1c) with an outlet opening (1d) and a coupling thread (11) for a discharge pipe for drawing off a prepared mixture.

4. Combined mixing and conveying arrangement according to claim 1, characterised in that the first and second runner wheels (4a, 4b) held at the same distance from one another of the shaft (3) consist of at least two runner wheel blades (4', 4") lying symmetrically of one another and set obliquely and are arranged at the same height relatively to one another.

5. Combined mixing and conveying arrangement according to claim 1, characterised in that the first and second guide wheels (2a, 2b) fixed on the inside wall (1i) of the lower cylindrical housing section (1a) of the axial centrifugal pump each consist of at least two guide blades (2', 2") arranged symmetrically to one another and are arranged opposite one another at the same height.

6. Combined mixing and conveying arrangement according to claim 1, characterised in that the lower housing part (1) comprises a left-hand flange (1j) with a threaded bore (1k) and the upper housing part (6) comprises a left-hand flange (6c) with a bore (6d), so that the lower housing part (1) can be screwed to the upper housing part (6) by a cheese head screw (16), an annular shoulder (6f) of the upper housing section (6a) being able to be fitted into the lower housing part (1) and a right-hand flange (6e) of the upper housing part (6) bears on the shoulder (1e).

7. Combined mixing and conveying arrangement according to claim 6, characterised in that the annular shoulder (6f) comprises an annular groove (6g) for a packing (14).

8. Combined mixing and conveying arrangement according to claim 6, characterised in that the right side of the upper cylindrical housing part (6) is provided with a pressure-relieving and control opening (15) directly above the right flange (6e).

9. Combined mixing and conveying arrangement according to one of the claims 1 to 8, characterised in that the rotor shaft (3) in the upper housing part (6) is mounted in ball bearings (7, 8), which are held spaced apart by a distance sleeve (7'), the ball bearing (7) being held in position by a shoulder (3b) of the rotor shaft (3) and an annular shoulder (6h) of the upper housing part (6) and the ball bearing (8) being held in position by a holding ring (8b) which can be fitted into an annular groove (6i) and also by a holding ring (8a) which can be inserted into an annular groove (3c) of the rotor shaft (3).

10. Combined mixing and conveying arrangement according to one of the claims 1 to 9, characterised in that the rotor shaft (3) comprises a journal (9a) and a feather key (9b).

11. Combined mixing and conveying arrangement according to one of the claims 1 to 10, characterised in that the running wheels (4a, 4b) and the guiding wheels (2a, 2b) are so arranged that the upper housing part (6) is able to be lifted out of the lower housing part (1), together with rotor shaft (3) with the mounting (7,8) thereof and the running wheels (4a,4b), after releasing the cylinder screw (16).

12. Combined mixing and conveying arrangement according to one of the claims 1 to 11, characterised in that the mixing nozzle (12) is constructed for rotation about its axis.

**Revendications**

1. Dispositif combiné pour mélanger et transporter des liquides très visqueux comportant un carter cylindrique, sur la paroi interne (1i) duquel sont rapportées plusieurs aubes de guidage (2', 2") fixes, formant des roues directrices (2a, 2b), et coaxialement auquel est disposé un arbre de rotor (3) comportant des roues de rotor (4a, 4b), étant entendu que le carter cylindrique, avec les aubes de guidage (2', 2"), formant roues directrices (2a, 2b), fixées sur sa paroi interne (1i), constitue le stator et que l'arbre de rotor (3), avec les roues de rotor (4a, 4b) disposées sur lui, constitue le rotor, ce dispositif comportant un joint d'étanchéité annulaire (14) de guidage, assurant l'étanchéité vers l'extérieur d'une enceinte de mélange (1h), comportant des orifices d'entrée latéraux pour des liquides à mélanger et comportant un orifice de sortie (1d) pour le mélange terminé, étant entendu que le dispositif combiné pour mélanger et transporter des liquides très visqueux est réalisé sous la forme d'une pompe rotative axiale et est disposé dans les parties (1, 6), inférieure et supérieure, du carter et que les liquides à mélanger peuvent être fournis en amont de la première roue de rotor (4a) disposée sur l'arbre de rotor (3), par l'intermédiaire d'un raccord de piquage (1e) latéral, disposé dans la partie inférieure (1) du carter, étant entendu que, de plus, des pales de roue de rotor (4', 4") des première et deuxième roues de rotor (4a, 4b) présentent au moins un trou (5), et étant entendu qu'enfin les roues directrices (2a, 2b) sont disposées sur la paroi interne (1i) de la partie inférieure cylindrique (1a) du carter, avec la même distance par rapport aux roues de rotor (4a, 4b), caractérisé en ce que le raccord de piquage (1e) présente à sa partie inférieure au moins un alésage (1g) dans lequel peut être montée une buse de mélange (12) comportant plusieurs orifices de sortie (13) pour la sortie d'un deuxième liquide.

2. Dispositif combiné de mélange et de transport suivant la revendication 1, caractérisé en ce que la pompe rotative axiale comporte au moins un étage.

3. Dispositif combiné de mélange et de transport suivant la revendication 1, caractérisé en ce que le raccord de piquage (1e) latéral présente, sur la partie inférieure (1) du carter un orifice d'entrée (1f) comportant un filetage de raccordement (10) pour une conduite d'alimentation en un composant principal liquide, de viscosité élevée, et en ce que, sur la partie inférieure cylindrique (1a) du carter, est disposée une trémie d'évacuation (1b) sur laquelle se raccorde un raccord de soutirage (1c) comportant un orifice de sortie (1d) et un filetage de raccordement à une conduite d'évacuation pour soutirer le mélange terminé.

4. Dispositif combiné de mélange et de transport suivant la revendication 1, caractérisé en ce que les première et seconde roues de rotor (4a, 4b), maintenues sur l'arbre de rotor (3) à la même distance l'une de l'autre, sont constituées d'au moins deux pales de roue de rotor (4', 4") disposées symétriquement l'une par rapport à l'autre et montées inclinées, et qu'elles sont disposées à la même hauteur l'une par rapport à l'autre.

5. Dispositif combiné de mélange et de transport suivant la revendication 1, caractérisé en ce que les première et seconde roues directrices (2a, 2b), fixées à la paroi interne (1i) de la partie inférieure cylindrique (1a) de la pompe rotative axiale, sont chacune constituées d'au moins deux aubes de guidage (2', 2") disposées symétriquement l'une par rapport à l'autre, et en ce qu'elles sont disposées à la même hauteur l'une par rapport à l'autre.

6. Dispositif combiné de mélange et de transport suivant la revendication 1, caractérisé en ce que la partie inférieure (1) du carter présente une bride de gauche (1j) comportant un alésage fileté (1k) et en ce que la partie supérieure du carter (6) présente une bride de gauche (6c) comportant un alésage (6d), de telle façon que la partie inférieure (1) du carter peut être fixée sur la partie supérieure du carter (6) au moyen d'une vis cylindrique (16), étant entendu qu'une embase annulaire (6f) de la partie supérieure du carter (6a) peut être mise en place et ajustée dans la partie inférieure (1) du carter et qu'une bride de droite (6e) de la partie supérieure du carter (6) vient s'appuyer sur le raccord de piquage (1e).

7. Dispositif combiné de mélange et de transport suivant la revendication 6, caractérisé en ce que l'embase annulaire (6f) présente une rainure annulaire (6g) pour un joint d'étanchéité (14).

8. Dispositif combiné de mélange et de transport suivant la revendication 6, caractérisé en ce que, sur le côté droit de la partie supérieure du carter (6), directement au-dessus de la bride de droite (6e), est prévue une ouverture de détente de la pression et de contrôle (15).

9. Dispositif combiné de mélange et de transport suivant l'une quelconque des revendications 1 à 8, caractérisé en ce que l'arbre de rotor (3) est monté dans la partie supérieure du carter (6) sur roulements à billes (7, 8), qui sont maintenus à distance au moyen d'une douille d'écartement (7'), étant entendu que le roulement à billes (7) est maintenu en position au moyen d'un épaulement annulaire (6h) de la partie supérieure du carter (6), et que, respectivement, le roulement à billes (8) est maintenu en position au moyen d'une bague de maintien (8b) pouvant être placée dans une rainure annulaire (6i), ainsi que par une bague de maintien (8a) pouvant être placée dans une rainure annulaire (3c) de l'arbre de rotor (3).

10. Dispositif combiné de mélange et de transport suivant l'une quelconque des revendications 1 à 9, caractérisé en ce que l'arbre de rotor (3) présente un tourillon de palier (9a) et une clavette d'entraînement (9b).

11. Dispositif combiné de mélange et de transport suivant l'une quelconque des revendications 1 à 10, caractérisé en ce que les roues de rotor (4a, 4b) et les roues directrices (2a, 2b) sont disposées de telle façon que la partie supérieure du carter (6), y compris l'arbre de rotor (3), avec leur paliers (7, 8) et les roues de rotor (4a, 4b), peuvent être retirées de la partie inférieure (1) du carter, après démontage des vis cylindriques (16).

12. Dispositif combiné de mélange et de transport suivant l'une quelconque des revendications 1 à 11, caractérisé en ce que la buse de mélange (12) est réalisée tournante autour de son axe.

FIG. 1

FIG. 2